# EUROPEAN PATENT SPECIFICATION

(11) **EP 3 818 483 B1**
(45) Date of publication and mention of the grant of the patent: **27.03.2024**
(21) Application number: 19755970.1
(22) Date of filing: 04.07.2019
(51) Int. Cl.: G06Q 10/08, G06Q 50/28, A47H 1/00, A47H 2/00

(54) **STRUCTURE FOR DELIVERIES AND/OR COLLECTIONS, IN PARTICULAR DOOR FOR DELIVERIES AND/OR COLLECTIONS**
STRUKTUR FÜR LIEFERUNGEN UND/ODER ABHOLUNGEN, INSBESONDERE TÜR FÜR LIEFERUNGEN UND/ODER ABHOLUNGEN
STRUCTURE POUR LIVRAISONS ET/OU COLLECTES, EN PARTICULIER UNE PORTE POUR LIVRAISONS ET/OU COLLECTES

(30) Priority: 05.07.2018 IT 201800006945; 03.07.2019 IT 201900010782
(43) Date of publication of application: 12.05.2021
(73) Proprietor: Meschini, Giorgio Maria Giuseppe Felice, 20159 Milano (IT); Repossi, Luca Alessandro, 26010 Vaiano Cremaso (Cremona) (IT)
(72) Inventor: Meschini, Giorgio Maria Giuseppe Felice, 20159 Milano (IT); Repossi, Luca Alessandro, 26010 Vaiano Cremaso (Cremona) (IT)
(74) Representative: Penza, Giancarlo
(86) International application number: PCT/IB2019/055713
(87) International publication number: WO 2020/008406

(56) References cited:
- CN-U- 207 538 691
- KR-A- 20100 006 149
- KR-A- 20140 120 586
- US-B2- 7 518 485

## Description

### TECHNICAL FIELD

The present invention relates to a structure for deliveries and/or collections.

In particular, the present invention relates to a structure for deliveries and/or collections that selectively allows access to a confined and secure space.

More in particular, the present invention relates to a door for deliveries and/or collections.

Recently there has been great development in so-called e-commerce, which requires the delivery of goods to an address specified by the customer and the possible collection of the same in case of returns or shipments from customers to third parties. However, in consideration of the constantly decreasing presence of a concierge service in homes, the delivery or collection of goods becomes a critical aspect within the entire e-commerce chain. In this regard it should be noted that the oft-repeated inability of the courier to deliver or collect the goods, for example because the recipient is not at home, leads to a multiplication in transport trips. This multiplication obviously has very negative effects on urban traffic and therefore on environmental pollution.

Solutions are known such as delivery or collection points, managed by personnel or automatically. Couriers can deposit goods here and customers can pass to collect them. While appreciated, this solution is however not lacking drawbacks. Naturally the presence of staff at the delivery point ensures the proper functionality of the system, but at the same time implies additional costs. Automatic delivery points, which are not yet widespread in the area, can be full and therefore not allow the deposit of other goods. Furthermore, the customer must travel to the delivery point, and particularly when this is far from the customer's usual travel route, this implies an increase in traffic and pollution.

The object of the present invention is therefore to overcome the drawbacks highlighted above in relation to the known art.

In general, a task of the present invention is to provide a structure for deliveries and/or collections able to guarantee an autonomous and certain delivery and/or collection of goods addressed to or sent by a customer.

Another object is to increase the delivery and/or collection time window of a package without any interference, that is, without requiring the physical presence of the person who requested the delivery and/or collection;
In particular, a task of the present invention is to provide a door able to ensure an autonomous and certain reception of the goods addressed to a customer.

Another task of the present invention is to predispose an automated delivery and/or collection system able to ensure a delivery of goods by a courier, an autonomous and certain reception of the goods by a customer or vice versa a delivery of goods by a customer, and a certain collection of the goods by a courier. KR 2014 0120586 A refers to an automatic parcel service safety door for confirming identity of visitor, has fixing cavity that is formed on front door, where guide rail opens and closes front door and platform board is set up in up and down end of guide rail. CN 207 538 691 U refers to an expressage aluminum alloy door comprises door leaf, where door leaf comprises hollow structure formed by outer door and inner door, and door leaf is hollow is provided with note receiving device and delivery box. KR 2010 0006149 A refers to automatic home-delivery service box for use in e.g. apartment, has main body coated with monomer material, fixture formed on wall of main body, door combined in end of main body, and switching groove formed in side of main body US 7 518 485 B2 refers to goods package accessing method for electronic commerce, involves deactivating delivery access code of specific section in lock box, so that code does not operate to access other sections after specific section is accessed.

### SUMMARY OF THE INVENTION

This object and these tasks are achieved by a structure for deliveries and/or collections, particularly a door adapted to be placed at the entrance of a house, in accordance with claim 1.

This object and these tasks are also achieved by means of an automated delivery and/or collection system comprising the structure for deliveries and/or collections, in accordance with claim 14.

### BRIEF DESCRIPTION OF THE DRAWINGS

To better understand the invention and appreciate its advantages, some of its exemplary and non-limiting embodiments are described below, referring to the accompanying drawings, wherein a door is shown as a preferred embodiment of the structure for deliveries and/or collections of the invention:
- figure 1 is a front view of a door in accordance with the invention;
- figure 2 is a view of the section along the line II-II of figure 1, wherein the door is in a first configuration;
- figure 3 is a section similar to that of figure 2, wherein the door is in a second configuration;
- figure 4 is a front view of a door in accordance with the invention;
- figure 5 is a view of the section along the line V-V of figure 4, wherein the door is in a first configuration;
- figure 6 is a section similar to that of figure 5, wherein the door is in a second configuration;
- figure 7 is a front view of a door in accordance with the invention;
- figure 8 is a view of the section along the line VIII-VIII of figure 7, wherein the door is in a first configuration;
- figure 9 is a section similar to that of figure 8, wherein the door is in a second configuration;
- figure 10 is a section similar to that of figure 8, wherein the door is in a third configuration;
- figure 11 is a section similar to that of figure 8, wherein the door is in a fourth configuration;
- figure 12 is a section similar to that of figure 8, wherein the door is in a fifth configuration;
- figure 13 is a front view of a door in accordance with the invention;
- figure 14 is a view of the section along the line XIV-XIV of figure 13, wherein the door is in a first configuration;
- figure 15 is a section similar to that of figure 14, wherein the door is in a second configuration;
- figure 16 is a front view of a door in accordance with the invention;
- figure 17 is a view of the section along the line XVII-XVII of figure 16, wherein the door is in a first configuration;
- figure 18 is a section similar to that of figure 17, wherein the door is in a second configuration;
- figure 19 is a front view of a door in accordance with the invention;
- figure 20 is a view of the section along the line XX-XX of figure 19, wherein the door is in a first configuration; and
- figure 21 is a section similar to that of figure 20, wherein the door is in a second configuration;
- figure 22 is a front view of a door in accordance with the invention;
- figure 23 is a view of the section along the line XXIII-XXIII of figure 22, wherein the door is in a first configuration; and
- figure 24 is a section similar to that of figure 23, wherein the door is in a second configuration;
- figure 25 schematically shows the door of the invention and a data processing unit to which it is coupled;

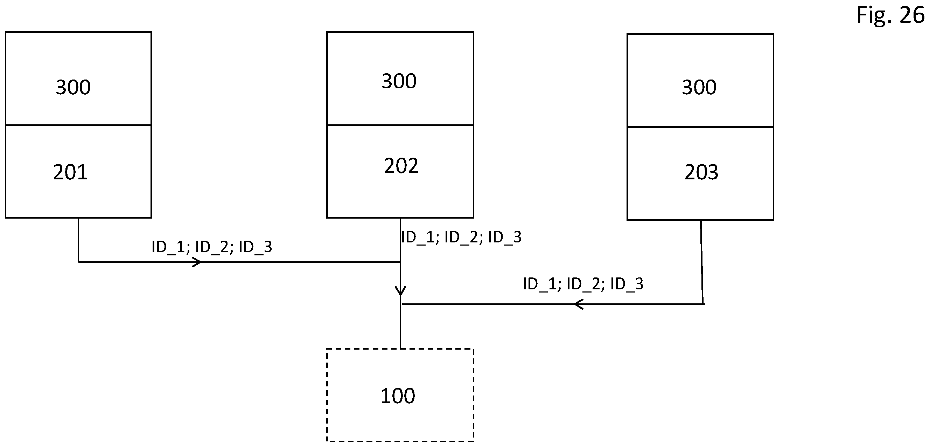

- figure 26 is a specific detail of figure 25;
- figure 27 schematically shows an automated delivery system comprising the door shown in the preceding figures;
- figure 28 schematically shows a front view of a door according to the invention;
- figure 29 schematically shows a view of the section along the line XXIX-XXIX of figure 28, wherein the door is in a first configuration;
- figure 30 schematically shows a section similar to that of figure 29, wherein the door is in a second configuration;
- figure 31 schematically shows a section along the line XXXI-XXXI of figure 29; and
- figure 32 schematically shows a section similar to that of figure 32, wherein the door is in a third configuration.

### DETAILED DESCRIPTION

The present invention in a first aspect relates to a structure 50 for deliveries and/or collections.

Preferably, the structure is manned or unmanned.

According to the invention, the structure comprises a compartment 58 adapted to contain packages 60, wherein the compartment 58 extends prevalently on the internal side I of the structure 50.

The structure further comprises a hatch 62 adapted to allow the passage of packages into/out of the compartment 58, wherein the hatch 62:
- opens on the external side E of the structure 50;
- is adapted to pass from a closed position C to a completely open position A.

The structure further comprises a first locking assembly 64 adapted to lock and unlock selectively the hatch 62 in the closed position C.

According to the invention, the first locking assembly 64 is electronically controlled and lockable/unlockable according to a predefined access parameter IDP_1;IDP_2;IDP_3. Preferably, the structure of the invention, whether it be single or multiple, comprises, coupled to said compartment (58) one from among:
- a window;
- a façade/surface equipped with windows;
- a wall inside or outside a house or a delivery/collection location;
- a gate, a fence or railing or outer limit of a house or garden of a condominium or independent house.

In a first embodiment the present invention relates to a door 50 adapted to be placed at the entrance of a house so as to define an internal side *I* and an external side E.

The door 50 comprises:
- a wing 52 adapted to allow the passage of people into/out of the house,
- a first hinge assembly 54 adapted to allow the rotation of the wing 52 between the closed position *C* and the completely open position *A*, and
- a second locking assembly 56 adapted to selectively lock and unlock the wing 52 in the closed position *C*.

As already mentioned with reference to the structure, the door 50 according to the invention comprises:
- the compartment 58 adapted to contain the packages 60, wherein when the wing 52 is in the closed position *C* the compartment 58 extends prevalently on the internal side *I* of the door 50;
- the hatch 62 adapted to allow the passage of the packages 60 into/out of the compartment 58, wherein the hatch 62:
   - opens on the external side *E* of the door 50;
   - is adapted to pass from a closed position *c* to a completely open position a;
- the first locking assembly 64 adapted to lock and unlock selectively the external hatch 62 in the closed position *c*,
wherein the first locking assembly 64 is electronically controlled and lockable/unlockable as a function of the predefined access parameter IDP_1;IDP_2;IDP_3.

The present invention in a second aspect relates to an automated delivery and/or collection system comprising:
an order receiving station 400 configured to:
   receive a delivery and/or collection order Ord of an object O from an ordering subject U;
   generate a delivery and/or collection identification parameter CIDP_1 ;CIDP_2;CIDP_3 as a function of the order Ord;
   send the delivery and/or collection identification parameter CIDP_1;CIDP_2;CIDP_3 to the ordering subject U;
delivery means 500 configured to transport the ordered object O towards said ordering subject U, and/or collect said object (O), in a corresponding package 60, the structure 50 of the first aspect of the invention configured to receive and/ allow the delivery of the package 60, wherein the first locking assembly 64 is electronically controlled and lockable/unlockable as a function of a predefined access parameter IDP_1; IDP_2; IDP_3;

- wherein the delivery and/or collection identification parameter CIDP_1 ;CIDP_2;CIDP_3, received from said ordering subject U, corresponds to the predefined access parameter IDP_1;IDP_2;IDP_3.

The technical effects achieved by one or more of the described aspects are:
- delivery and/or collection efficiency of a package in terms of certainty of the receipt and/or collection of the same from the recipient;
- increase in the delivery and/or collection time window of a package without any interference, that is, without requiring the physical presence of the subject who requested the delivery and/or collection.
- automated and autonomous receipt and/or delivery of the package;
- optimisation of the delivery and/or collection missions;
- subsequent reduction of environmental pollution and traffic.

The idea underlying the present invention ensures a secure benefit for the user who must receive a package, as it allows an automated delivery and/or collection even in his or her absence, and theoretically achievable at any time of the day or night.

The idea underlying the present invention further ensures a secure benefit also for the transport couriers which can arrange deliveries and/or collections with the certainty of not having to carry out repeated attempts of delivery and/or collection due to the absence of the recipient, maximising efficiency in terms of the quantity of goods transported as well as delivery and/or collection times.

The idea underlying the present invention ensures a secure benefit to a possible online store (Amazon, eBay etc.) which uses the aforementioned transport couriers, allowing an optimisation of the delivery and/or collection costs made possible by the maximisation of delivery and/or collection efficiency.

In the context of the present discussion, certain terminological conventions have been made in order to make it easier and more fluid to read. Such terminological conventions are explained below with reference to the accompanying figures.

Since the invention is intended to be used in the presence of gravitational acceleration g, it is understood that the latter unequivocally defines the vertical direction. Similarly, it is understood that according to gravitational acceleration g, the following terms are unequivocally defined: "top", "upper", "above", "full" and the like, with respect to the terms "bottom", "lower", "below", "base" and the like.

The vertical direction also identifies the planes perpendicular thereto as "horizontal" planes.

Furthermore, in the description which follows, "height" is intended as the vertical dimension, "width" is intended as the horizontal dimension parallel to the plane of the structure 50, in particular the door 50, and "depth" is intended as the horizontal dimension perpendicular to the plane of the structure 50, in particular the door 50.

Finally, in the description that follows, the term "armoured" is used for the door and some parts of the structure in general. By this it is meant that the armoured structure is constructed to be resistant to burglary and is equipped with special burglar-proof characteristics. A similar embodiment can for example comprise one or more of the following technical characteristics:
- if it has a fixed frame, the latter can preferably be realised with steel profiles 2.5 mm thick (preferably 3 mm or even 4 mm), with one or more Z-type folds.
- If it has a movable part, for example a wing, the latter can preferably be realised with a double sheet of steel 1 mm thick (preferably 1.5 mm).
- If there is a lock, the latter can be protected by a third steel sheet.

An armoured structure, in particular an armoured door, also defined an "anti-intrusion" door, can preferably correspond to that which is prescribed by the standard UNI EN 1627. Other structures can be realised analogously with the requirements for the doors.

In light of what has been mentioned above, the door 50 is preferably armoured.

As already mentioned above, the structure 50, in particular the door 50, comprises a compartment 58 adapted to contain packages 60. Therefore the compartment 58 is not identifiable with a classic mailbox, since the latter is designed to contain only correspondence, envelopes, postcards, papers such as promotional leaflets, and in general items that extend mainly in a plane. The compartment 58 of the structure 50, in particular the door 50, is instead adapted to contain items which extend in a comparable manner in all three dimensions. By way of example, the compartment 58 can have an internal volume greater than 20 dm³, preferably greater than 50 dm³, even more preferably greater than 80 dm³. A similar volume naturally implies that the compartment 58 has the relevant dimensions, for example with a depth greater than 20 cm, preferably greater than 30 cm, even more preferably greater than or equal to 40 cm.

Since the depth of the compartment 58 is relevant and substantially exceeds the thickness of the structure 50, in particular the door 50, the compartment 58 extends prevalently on the internal side *I* of the structure 50, in particular the door 50, and then inside the house. If the house is part of a condominium, this detail allows completely avoiding the use of the surface area of the condominium.

Once opened, the external hatch 62 allows access to the compartment 58 from the external side *E* of the structure 50, in particular the door 50. The external hatch 62 has a height and a width which are preferably comparable to the height and the width of the compartment 58. This means that, once the external hatch 62 is fully opened, a package 60 can be gently placed on the bottom of the compartment 58. This further differs the compartment 58 according to the invention with respect to a common mailbox, since in this case the access to the internal volume is provided by a mail slot placed on the top of the mailbox. Correspondence and small packages must therefore be dropped in the mailbox, with potential damage to their contents. Instead in the invention, the access to the internal volume of the compartment 58 is guaranteed by the external hatch 62 which extends to a height comparable to that of the compartment 58 itself. This allows gently placing the packages 60 in the compartment 58.

As already mentioned above, the compartment 58 comprises the first locking assembly 64 adapted to lock and unlock selectively the external hatch 62 in the closed position c.

In addition, some different solutions will be described for allowing the control of the opening of the first locking assembly 64.

Preferably, the compartment 58 is also in turn armoured in such a way as to resist burglary. In other words, the compartment 58 can be preferably realised using techniques similar to those used to realise the armoured structure / door 50. In this way, also by opening the external hatch 62, the house is not entered, but a space is entered which is in turn secure. There is therefore no way for a burglar to pass the obstacle constituted by the armoured structure/ door 50 through the external hatch 62. In this way, the burglar could possibly open the external hatch 62 and, in the worst case, steal only the package 60, thus limiting the damage.

Even more preferably, the external hatch 62 is also armoured. In other words, just like the compartment 58, the external hatch 62 can also be preferably realised using techniques similar to those used to realise the structure/door 50. In this way, also opening the external hatch 62 is an obstacle for the burglar which is similar to that formed by the armoured structure/door 50. In this way, a package 60 delivered into the compartment 58 also remains in a secure place.

In a preferred embodiment of the invention, the structure, in particular the door 50, only provides the external hatch 62; this allows installing the structure of the invention even if the space from the internal side I of the door is minimal.

In this preferred solution, in the case of a door 50, when the customer comes home he/she empties the compartment 58 by accessing it from the external hatch 62.

Preferably, in an alternative embodiment of the invention, the compartment 58 also comprises an internal hatch 66. The internal hatch 66 is in turn adapted to allow the passage of the packages 60 into/out of the compartment 58, and it opens on the internal side *I* of the structure, in particular the door 50. The internal hatch 66 can allow collecting the package 60 from the compartment 58 without exiting the house. Preferably just like the external hatch 62, the internal hatch 66 is also armoured.

Preferably the external hatch 62 comprises a second hinge assembly 68 adapted to allow the rotation of the hatch 62 between a closed position c and a completely open position a.

Some specific embodiments of the invention are described below in greater detail, by way of non-limiting example. As the person skilled in the art may well understand by reading the description that follows, the technical features described for one embodiment can be used in other embodiments, remaining fully within the scope of the invention.

The figures that will be described schematically show embodiments of the structure for deliveries and/or collections of the invention, in particular with reference to a door.

As already mentioned, the structure for deliveries and/or collections of the invention, whether it be single or multiple, comprises, coupled to the compartment 58 one from among:
- a window;
- a façade/surface equipped with windows;
- a wall inside or outside a house or a delivery/collection location;
- a gate, a fence or railing or outer limit of a house or garden of a condominium or independent house.

The structure of the invention, in its most general formulation comprises the compartment 58 as described below with reference to the figures.

Although in the figures reference is made expressly to a door, the different embodiments of the compartment 58 are applicable to all structural types of the invention.

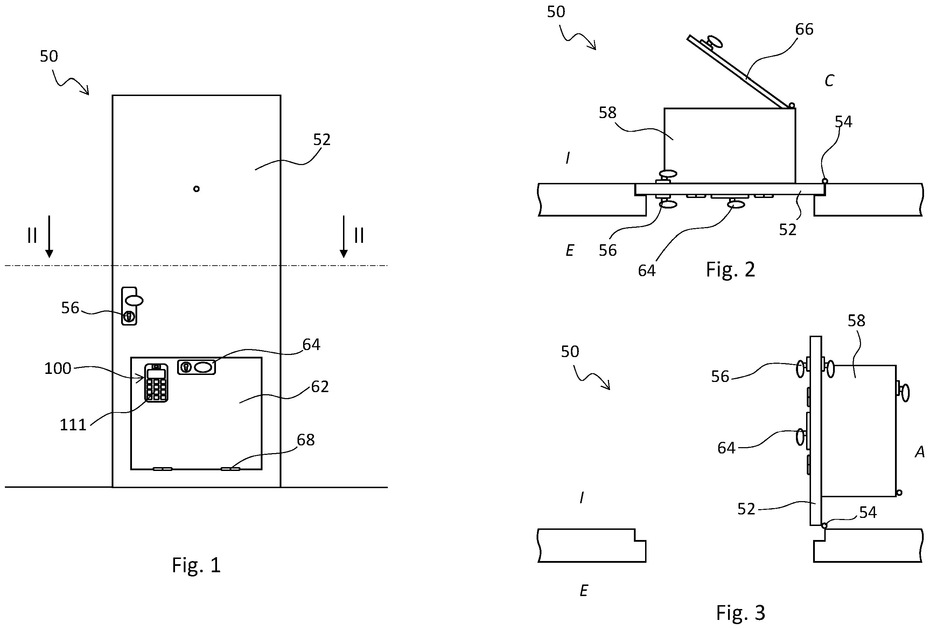

In particular, the compartment 58 in the various embodiments can be coupled to a window, a façade/surface equipped with windows, a wall inside or outside a house or a delivery/collection location, a gate, a fence or railing or external limit of a house or garden of a condominium or single house, to define the specific structure according to the invention. Figures 1 to 3 schematically show a first group of embodiments, with specific reference to the door, but whose characteristics, when compatible, generally also apply to the structure according to the invention.

In a preferred variant of the embodiments shown, the door 50 of figures 1-3 is realised ex-novo complete with the technical characteristics described below.

In an alternative variant of the embodiments shown, the door 50 could be a normal door of the known type, to which changes have been made. In particular, the embodiment of figure 1 could be obtained by a professional locksmith by opening a window in the sheets that constitute the wing 52 and applying within that window the compartment 58, which protrudes on the internal side, and the relative external hatch 62, which opens on the external side. In the specific case, the compartment 58 would also comprise an internal hatch 66 depicted in the partially open position in figure 2. By way of example, in the embodiment of figures 1 to 3, all the locks are mechanical, thus maintaining a minimum degree of difficulty for the installation of the invention in already existing houses.

The optional method described above to obtain the invention starting from a known type of door 50 allows minimising expenses, recovering the value of the door 50 itself and the relative fixed structures.

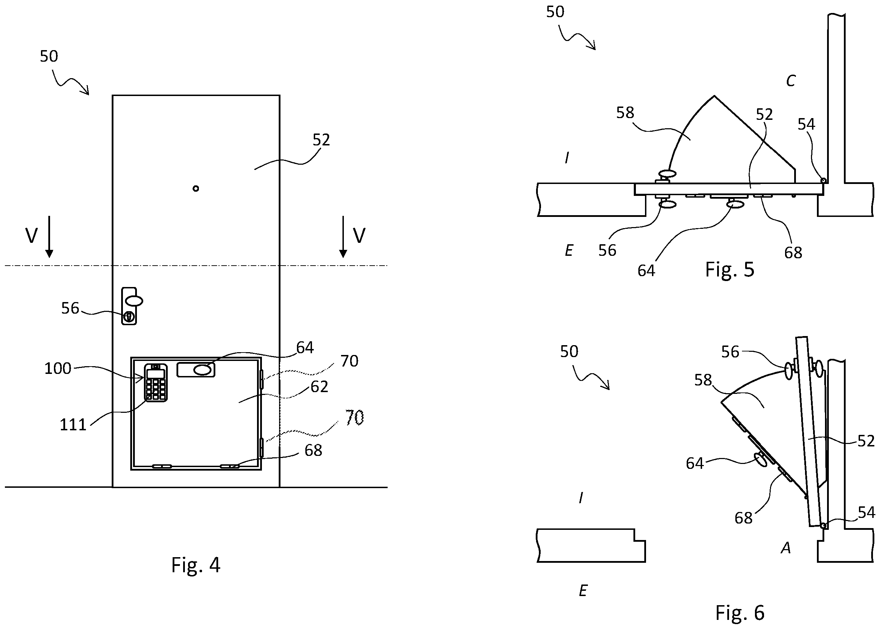

Figures 4 to 6 schematically show a second group of embodiments. Also in these embodiments, as in the preceding ones, the preferred variant provides that the door 50 is realised completely ex-novo, while the alternative variant provides that the door 50 can be a normal door of a known type to which the necessary changes have been made. However, the peculiarity of these embodiments is that of adapting to the specific case in which the wing 52 of the door, in the completely open position, moves to approach a fixed internal obstacle of the house, typically a wall. Therefore in this case there is not enough space inside the house to allow the opening of the wing 52 when the latter bears a compartment 58 similar to that of figures 1 to 3. In the embodiment of figures 4 to 6, the compartment 58 is mounted on the wing 62 in a swivelling fashion. More in particular, apart from the second hinge assembly 68 which allows the opening of the external hatch 62, the door 50 comprises a third hinge assembly 70 which allows the rotation of the entire compartment 58 with the relative external hatch 62. The third hinge assembly 70 preferably comprises springs adapted to maintain, in the absence of other external forces, the compartment 58 on the internal side of the door 50.

When the wing 52 is brought into the completely open position A the compartment 58 comes into contact with the fixed obstacle and rotates towards the external side of the door 50. Preferably the door 50 also comprises stops that prevent the excess rotation of the compartment 58 beyond the angle envisaged during its design. In this way the level of security provided by the door 50 is maintained intact.

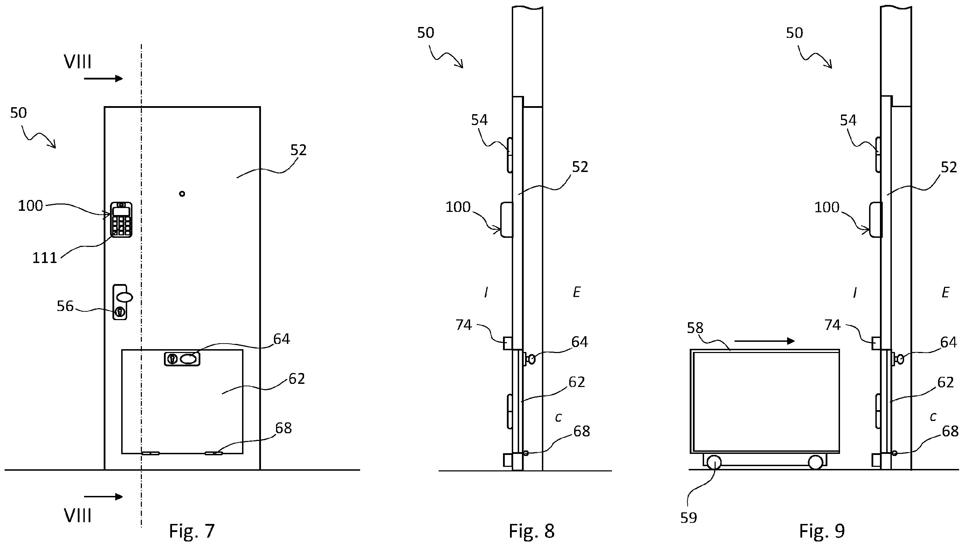

In this specific example, in order to limit the overall dimensions on the internal side as much as possible, the compartment 58 does not comprise an internal hatch 66 and the packages 60 must be delivered and collected through the same external hatch 62. As can be seen in figure 4, the first locking assembly 64 of the external hatch 62 comprises an electronic lock. Figures 7 to 12 schematically show a third group of embodiments with specific reference to the door, but the characteristics of which, when compatible, generally also apply to the structure according to the invention.

In a preferred variant of the embodiments shown, the door 50 is realised ex-novo, complete with the technical characteristics described below.

In an alternative variant of the embodiments shown, the door 50 could be a normal door of the known type, to which changes have been made.

In the front view of the external side, these embodiments are extremely similar to that of figure 1.

However, in the height sections of figures 8 to 12 the peculiar characteristics of these embodiments can be fully appreciated, wherein the compartment 58 can be coupled and uncoupled to/from the door 50 according to need.

In order to eliminate the dimensions of the compartment 58 behind the wing 52, it can be seen in figure 8 how the compartment 58 has been uncoupled from the door 50.

More generally, the compartment 58 can be coupled to/uncoupled from the door 50.

In this configuration, the door 50 according to the invention has dimensions absolutely comparable to those of a door of a known type. Naturally in this embodiment it is absolutely preferable that the external hatch 62 is armoured. In fact, in the configuration of figure 8 the eventual opening of the external hatch 62 would allow direct access to the house.

In accordance with some embodiments, the compartment 58 must be coupled and uncoupled from the door 50 manually, as necessary. In this case, the inconvenience resulting from the greater overall dimensions of the door 50 is only limited to the days in which the delivery of a package 60 is expected, while on all other days the door 50 has dimensions which are absolutely comparable to those of a door of the known type.

In accordance with another particular embodiment, schematically shown in figure 9, the compartment 58 is instead able to autonomously approach the
internal side of the wing 52 when the latter is in the closed position *C*.

Once the compartment 58 has completely approached the wing 52, suitable locking means 74 firmly constrains it to the door 50. Naturally it is highly preferable that the compartment 58 and locking means 74 which constrains it to the wing 52 also ensure an adequate level of security against burglary.

In this configuration, the compartment 58 comprises autonomous movement means 59 arranged for an automated coupling/decoupling of the compartment 58 with respect to the door 50 itself; normally, the compartment 58 is displaced in a predefined position inside the house, not adjacent to the door 50.

The door 50 of the invention comprises a processing unit 100 logically connected to the autonomous movement means 59 and the locking means 74.

The processing unit 100 is remotely or locally dislocated from the door 50.

A local configuration interface 111 and/or remote configuration interface 121 are associated with the processing unit 100.

When the owner leaves the house, he/she sets an automatic movement command of the compartment 58 via one of the interfaces mentioned. At the subsequent closing of the door 50, the compartment 58 moves by means of the autonomous movement means 59 and approaches the wing 52, coupling with the locking means 74 for a solid constraint to the door 50.

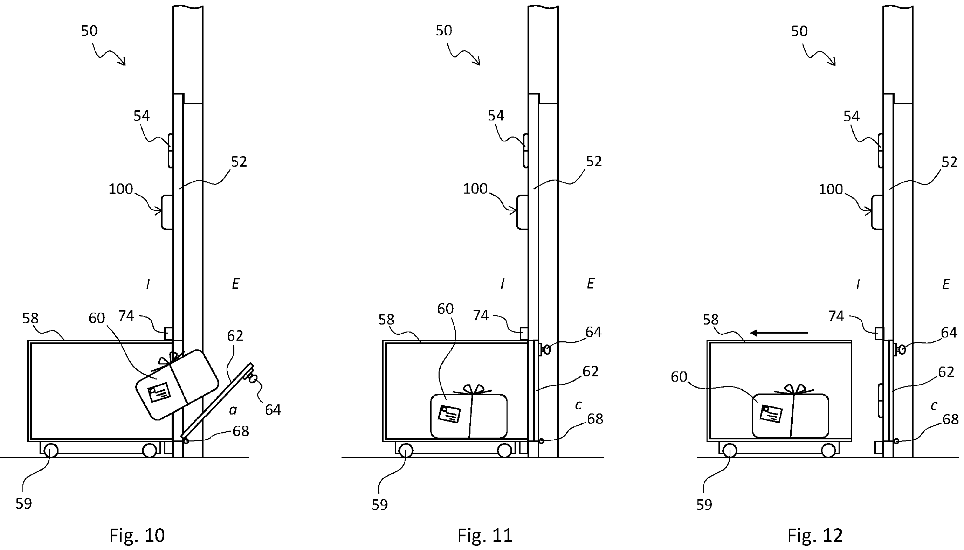

Figure 10 schematically shows the moment of delivery of the package 60. On that occasion, the external hatch 62 is lawfully opened, the package is placed on the bottom of the compartment 58 and immediately afterwards the external hatch 62 is closed again, thus reaching the configuration of figure 11.

At the end of this procedure, the locking means 74 frees the compartment 58 that autonomously, via the autonomous movement means 59, moves away from the wing 52, going to occupy the predefined location inside the house.

Thus the door 50 returns to assume a configuration similar to that of figure 8 and, in its essential features, similar to that of a door of the known type.

In accordance with this embodiment, a user does not suffer any inconvenience due to the dimensions of the compartment 58, since during the use of the door 50 the latter has absolutely comparable dimensions to those of a door of the known type. In contrast, the steps in which the door 50 assumes greater dimensions because of the compartment 58, are limited to a short period and are carried out in full autonomy, without any intervention by the user.

In addition, in this embodiment, when the compartment 58 is not firmly constrained to the door 50 it constitutes an independent furnishing element, similar to a table, a bedside table or the like. Because of its particular form, the compartment 58 of this embodiment does not require an internal hatch.

In all embodiments of the invention, the processing unit 100 can preferably also control the second locking assembly 56 of the wing 52, and/or the first locking assembly 64 of the external hatch 62, as well as the locking means 74 and the autonomous movement means 59.

The electronic unit 100 can also communicate with the compartment 58 in order to control its movements.

According to the invention, the first locking assembly 64 is electronically controlled and lockable/unlockable as a function of a predefined access parameter IDP_1;IDP_2;IDP_3.

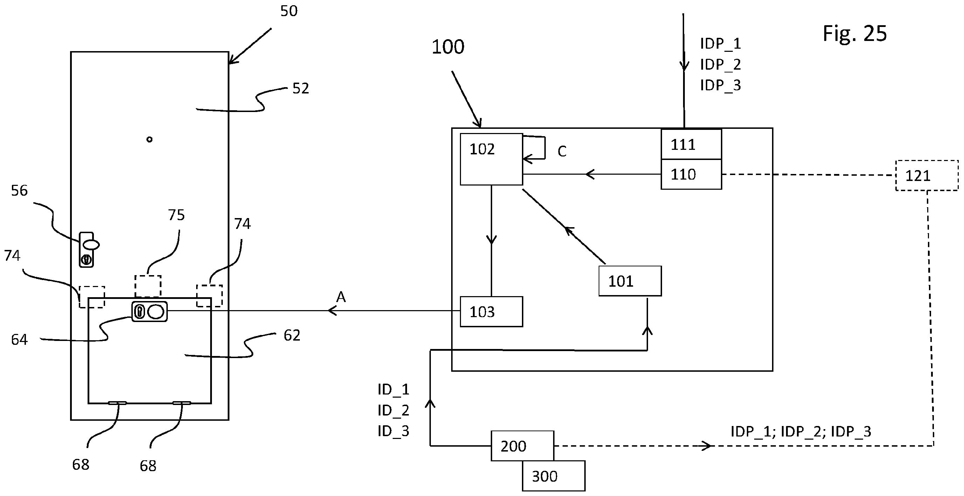

With particular reference to figure 25, the processing unit 100 is configured to control the electronic locking/unlocking of the first locking assembly 64.

In the course of the present description and in the following claims, the processing unit 100 is logically divided into distinct functional modules (memory modules or operating modules) that perform the described functions.

This processing unit 100 can comprise a single electronic device, appropriately programmed to perform the functionalities described, and the different modules can correspond to hardware entities and/or software routines that are part of the programmed device.

Alternatively or additionally, these functionalities can be performed by a plurality of electronic devices on which the aforesaid functional modules can be distributed.

The processing unit 100 can also make use of one or more processors for executing the instructions contained in the memory modules.

The aforementioned functional modules can also be distributed on different local or remote computers, depending on the architecture of the network in which they reside.

With particular reference to figure 25, with reference to the locking/unlocking of the first locking assembly 64, the processing unit 100 comprises a reception module 101 configured to receive one or more from among:
- a first access parameter ID_1 representing a delivering subject S adapted to interact with the compartment 58;
- a second access parameter ID_2 representing an object O to be placed in the compartment 58;
- a third access parameter ID_3 representing an order Ord made of an object to be placed in the compartment 58.

The processing unit 100 further comprises a comparison module 102 configured for comparing the received access parameter ID_1;ID_2;ID_3 with the predefined access parameter IDP_1 ;IDP_2;IDP_3.

The processing unit 100 further comprises a release module 103 configured to release the first locking assembly 64 as a function of the correspondence between the predefined access parameter IDP_1 ;IDP_2;IDP_3 and the received access parameter ID_1 ;ID_2;ID_3.

Preferably, the processing unit 100 comprises a memory module 110 configured to store the predefined access parameter IDP_1; IDP_2; IDP_3.

The processing unit 100 is in data connection with one or more local user interface 111 and remote user interface 121, both configured for an entry of the predefined access parameter IDP_1;IDP_2;IDP_3 in the memory module 110.

Preferably, the local user interface 111 includes a keypad or a touch display.

Preferably, the local user interface 111 is dislocated on the structure, in particular on the door 50.

Alternatively or in addition, the local user interface 111 is dislocated on a wall adjacent to the door 50.

Preferably, the remote user interface 121 comprises a means for entering data associated with one or more from among a calculator and/or a smartphone and/or a PC tablet.

The structure, in particular the door 50, of the invention also comprises detection means 200 arranged for detecting an access parameter ID_1, ID_2, ID_3.

Preferably, the detection means 200 comprises one or more from among:
- a bar code reader 201, RFID etc. arranged to read an access parameter ID_1;ID_2;ID_3, reproduced on a relevant legible medium;
- a touch screen display 202 arranged to receive a manual entry of said access parameter ID_1;ID_2;ID_3;
- a television camera 203 arranged to film the access parameter ID_1;ID_2;ID_3.

In this particular preferable but non-limiting variant, on the touch screen, a list of delivering subjects in a predefined period can preferably be provided; the subject can be identified from this list during the delivery, followed by the insertion of the corresponding access parameter; in this particular variant, the delivering subject can also be an acquaintance or a family member provided with the first access parameter ID_1, preferably fixed.

The detection means 200 is further provided with telephone connection means 300 arranged to transmit towards the remote user interface 121 the detected access parameter ID_1;ID_2;ID_3.

This turns out to be particularly advantageous in case problems occur at the time of the delivery of the package 60; for example, the recipient may not have entered the predefined access parameter IDP_1; IDP_2; IDP_3.

A connection request button is provided, associated with the television camera 203, which activates the telephone connection means 300 for a phone call to the home owner and, simultaneously turns on the television camera so that the owner sees the delivering subject remotely, and, for example, remotely opens the compartment for him or her.

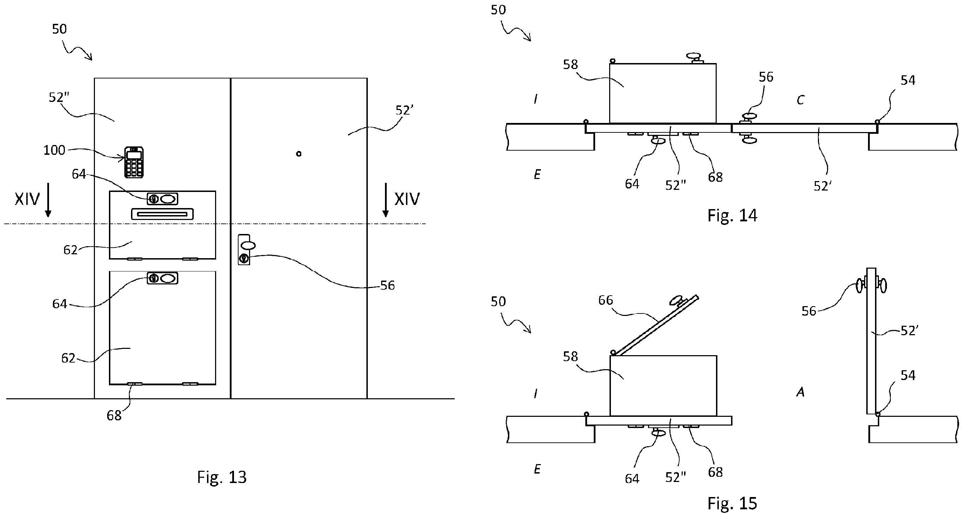

Figures 13 to 15 schematically show a fourth group of embodiments with specific reference to the door, but the characteristics of which, when compatible, generally also apply to the structure according to the invention.

In a preferred variant of the embodiments shown, the door 50 is realised ex-novo, complete with the technical characteristics described below.

In an alternative variant of the embodiments shown, the door 50 could be a normal door of the known type, to which changes have been made.

In these embodiments, the door 50 is of the type which comprises a double wing 52. In this type of door 50, a first wing 52' is movable between the closed position C and the completely open position A, while a second wing 52" normally remains fixed in its closed position C and it can possibly be brought into the respective completely open position A as necessary, for example in the case of maintenance or with the need to expand the passage for access to the house to the maximum width.

In accordance with these embodiments, it is preferable to separate the roles between the two wings 52, allocating the first wing 52' to the passage of persons entering/exiting the house, and mounting on the second wing 52" one or more compartments 58 with the respective hatches 62.

The embodiment of figure 13 shows how one of the hatches 62 arranged on the second wing 52" of the door 50 also comprises a slot for the delivery of mail, understood as envelopes, postcards, sheets and flyers.

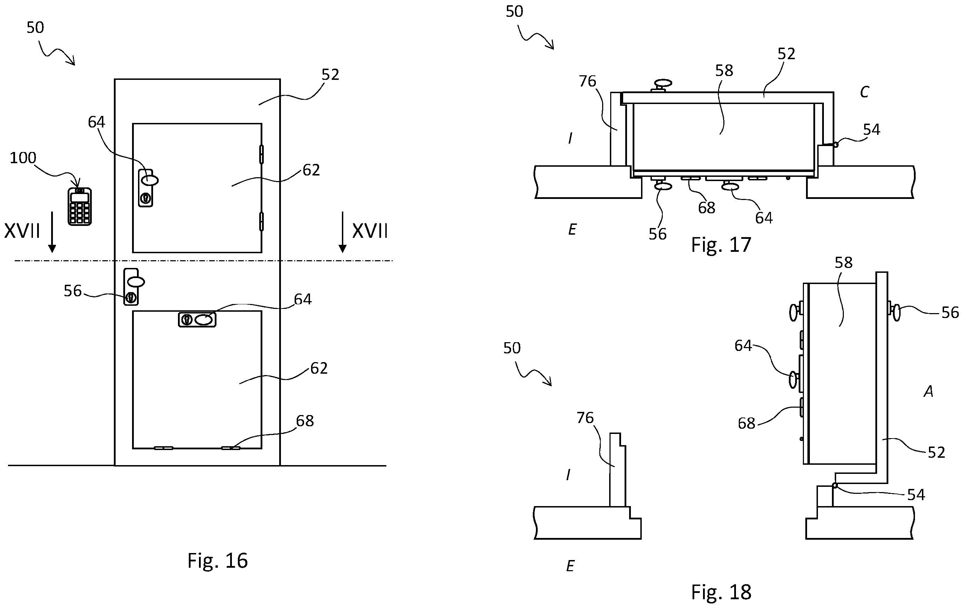

Figures 16 to 18 schematically show a fourth group of embodiments with specific reference to the door, but the characteristics of which, when compatible, generally also apply to the structure according to the invention.

In these embodiments, the door 50 has a double structure which gives it a depth sufficient to contain the compartment 58 therein.

In order to mount a similar door 50 in a secure and functional manner, accessory structures 76 must be provided. These accessory structures 76 can be of the construction or carpentry type, but in any case must be adapted to constitute a sort of bushing within which the door 50 is housed when it is in the closed position C.

To ensure that the door 50 can rotate freely, and that it does not have excessive dimensions when the passage is in the completely open position A, the first hinge assembly 54 is advantageously located in an intermediate position between the internal surface and the external surface, preferably closer to the latter. This solution is schematically shown in figures 17 and 18.

In addition, in the embodiment schematically shown in figures 17 and 18, the armoured structure of the door is placed internally, while a simpler panel forms the outer surface on which the hatches 62 open. Thanks to this solution, the door 50 assumes a pleasant appearance, both inside and outside, while simultaneously maintaining a relatively low weight. In accordance with other possible embodiments, the entire structure of the door 50 can be armoured, thereby increasing both the security that it ensures, and its weight. However, this increased weight can be easily managed in the case in which the accessory structures 76 of construction that support the door 50 must be specially constructed.

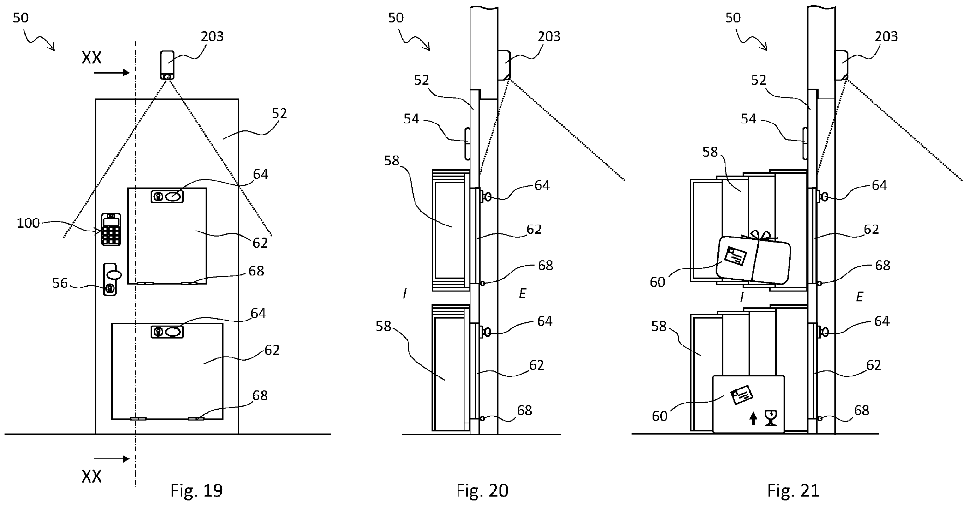

Figures 19 to 21 schematically show a fifth group of embodiments with specific reference to the door, but the characteristics of which, when compatible, generally also apply to the structure according to the invention.

In a preferred variant of the embodiments shown, the door 50 is realised ex-novo, complete with the technical characteristics described below.

In an alternative variant of the embodiments shown, the door 50 could be a normal door of the known type, to which changes have been made.

In these embodiments, the compartment 58 has a telescopic structure. This structure allows limiting the dimensions inside the house when the compartment 58 is not used (as schematically shown for example in figure 20) and increasing the depth when the compartment 58 is going to receive a package 60.

The telescopic structure of the compartment 58 is preferably similar to that of the telescopic safety covers used on machine tools.

In the specific embodiment of figures 19-21, the door 50 also includes the aforementioned television camera 203, which is dislocated outside the door 50.

The television camera 203 is configured for a timed recording, at least in video format of an opening of the compartment 58 in a reference time interval defined as a function of a reference time instant corresponding to the opening of the compartment 58.

The reference time interval of analysis of the opening of the compartment 58 corresponds to one from among:
- a first predefined time interval preceding the reference time instant;
- a second predefined time interval following the reference time instant;
- a sum of a first predefined time interval preceding the reference time instant and a second predefined time interval following the reference time instant.

In particular, for a detailed description of the timed recording, please refer to the patent application no. 102017000121567 of the same applicant.

Preferably, a second television camera 205 is also provided inside the door 50.

The second television camera 205 is configured for a timed recording, at least in video format of an opening of the door 50 in a reference time interval defined as a function of a reference time instant corresponding to the opening of the door 50.

In other words, the television camera serves as a surveillance camera to detect burglaries.

The reference time interval of analysis of the opening of the door 50 corresponds to one from among:
- a first predefined time interval preceding the reference time instant;
- a second predefined time interval following the reference time instant;
- a sum of a first predefined time interval preceding the reference time instant and a second predefined time interval following the reference time instant.

In particular, for a detailed description of the timed recording, please refer to the patent application no. 102017000121567 of the same applicant.

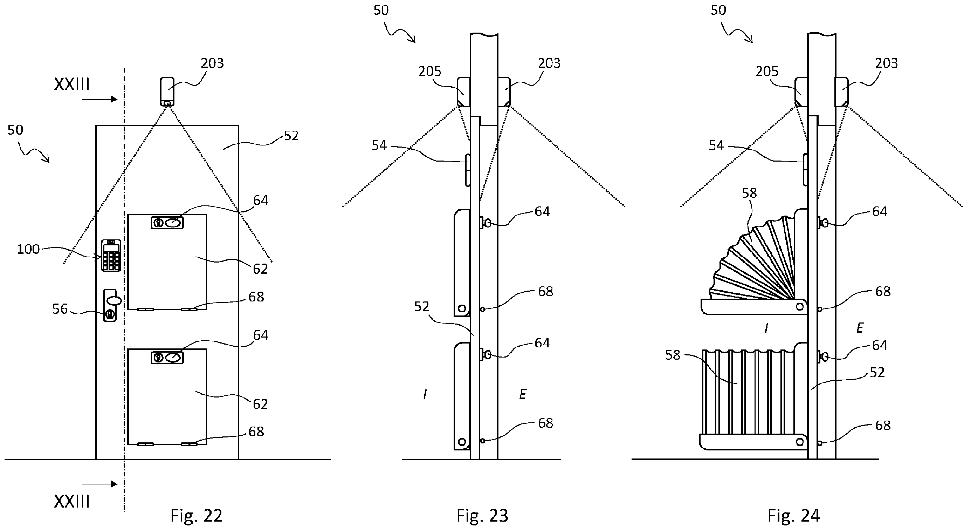

Figures 22 to 24 schematically show a sixth group of embodiments with specific reference to the door, but the characteristics of which, when compatible, generally also apply to the structure according to the invention.

In a preferred variant of the embodiments shown, the door 50 is realised ex-novo, complete with the technical characteristics described below.

In an alternative variant of the embodiments shown, the door 50 could be a normal door of the known type, to which changes have been made.

In these embodiments, the compartment 58 has a bellows structure.

In particular, the bellows structure can extend, when in the condition of receipt/delivery of goods, with a rotation axis that is perpendicular or parallel to the direction of the gravitational acceleration vector g.

This structure allows limiting the dimensions inside the house when the compartment 58 is not used (as schematically shown for example in figure 23) and increasing the volume when the compartment 58 is going to receive a package 60 (as schematically shown for example in figure 24). This bellows structure preferably comprises steel frame elements and a cut-resistant cloth, such as a cloth made of poly-aramid fibres and/or steel fibres. Also in the specific embodiment of figures 22-24, the door 50 comprises the above-mentioned television camera 203.

Preferably, in all embodiments of the invention the compartment 58 is equipped with detection means 75 for detecting the package 60, in particular a photocell, configured for detecting the actual presence of the package upon the closure of the compartment 58 in order to avoid false deliveries, i.e. openings and closings of the compartment without delivery of the package 60.

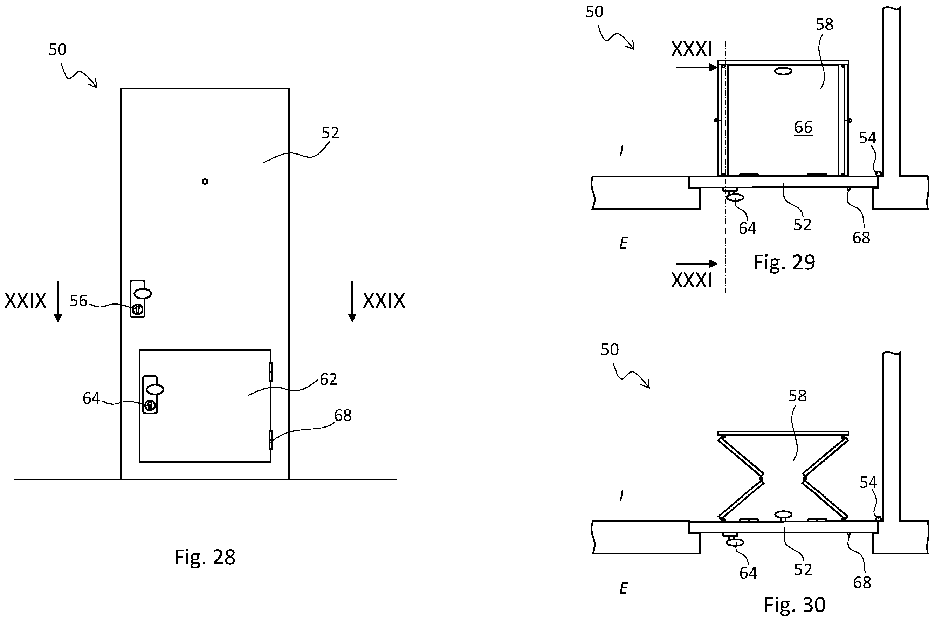

Figures 28 to 31 schematically show a seventh group of embodiments with specific reference to the door, but the characteristics of which, when compatible, generally also apply to the structure according to the invention.

In a preferred variant of the embodiments shown, the door 50 is realised ex-novo, complete with the technical characteristics described below.

In an alternative variant of the embodiments shown, the door 50 could be a normal door of the known type, to which changes have been made.

In the front view of the external side, these embodiments are extremely similar to that of figure 1.

In these embodiments, the compartment 58 has a collapsible structure.

In particular, the collapsible structure comprises folding side walls hinged to each other and an internal hatch 66. The walls and the internal hatch 66 of the collapsible structure are preferably armoured. Preferably, in accordance with this embodiment, the compartment 58 does not comprise a bottom wall, thus when the package 60 is delivered, it is placed on the floor.

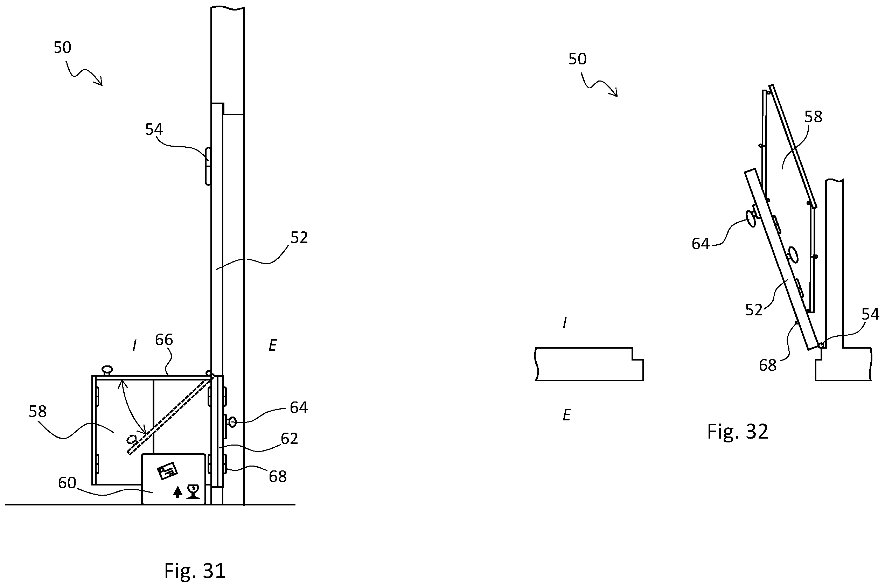

The internal hatch 66 is movable between a horizontal position and a vertical position. In the vertical position the internal hatch 66 is placed parallel and near the hatch 62 and allows the structure of the compartment 58 to fold on itself (see figures 30 and 32). In the horizontal position the internal hatch 66 is placed to close the top of the compartment 58 and it stiffens the structure, allowing it to avoid folding on itself (see figures 29 and 31). This structure allows limiting the dimensions inside the house when the compartment 58 is not used (as schematically shown for example in figure 30) and increasing the volume when the compartment 58 is going to receive a package 60 (as schematically shown for example in figures 29 and 31).

As the person skilled in the art can well appreciate from a comparison between the schematic figures 30 and 32, the structure of the compartment 58 can collapse in different ways, depending on how the hinges are locked or left free. For example, figure 30 shows a first way to collapse the structure, in a "bellows" manner. In accordance with this bellows manner, the two foldable side walls are folded upon themselves like a book, thereby reducing the overall dimensions of the compartment 58 when it is empty. This first bellows manner allows obtaining a very compact and stable configuration which can be maintained for an indefinite time during which the compartment 58 is not needed.

Figure 32, for example, shows a second way to collapse the structure, in a "flag" manner. In accordance with this flag manner, the two folding side walls remain rigidly extended and both rotate with respect to the wing 52 of the door 50. This flag manner reduces the overall dimensions of the compartment 58, when it is empty, making it possible to open the wing 52 inwardly also against a fixed obstacle, similarly to the embodiment of figures 4 to 6. This second flag manner allows obtaining a very compact and temporary configuration, especially useful to be able to easily open the wing 52 after having removed the package 60 from the compartment 58.

Note that the internal hatch 66 can stabilise the structure of the compartment 58 in both ways to make it collapse. In fact, when the internal hatch 66 is raised, it prevents the side walls from rotating and folding on themselves.

In a second aspect, the invention describes an automated delivery system comprising the door 50 in the described embodiments.

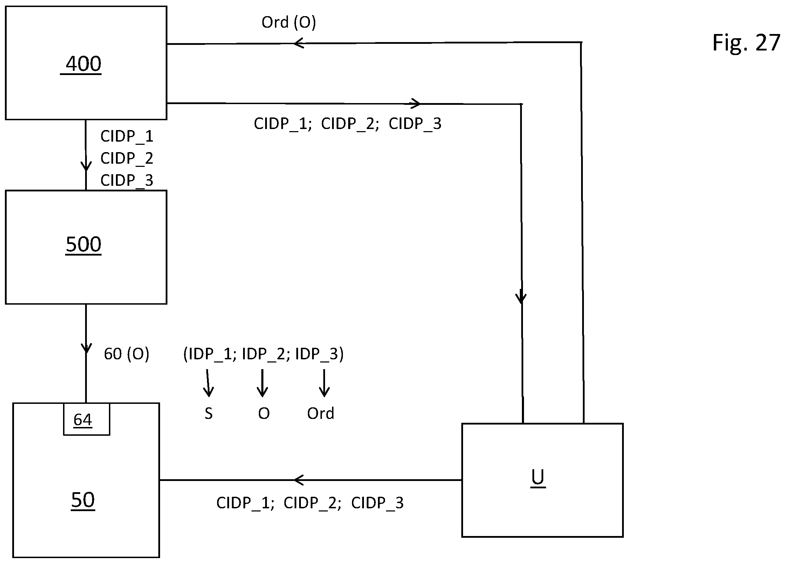

According to the invention, with reference to figure 27, the automated delivery system comprises an order receiving and/or delivery station 400.

The order receiving station 400 is configured to receive an order Ord of an object O from an ordering subject U.

It is assumed that the ordering subject U is the recipient subject of the object O ordered or who, however, if the order had been carried out by a third party, has been identified as the recipient subject.

The order receiving station 400 is further configured to generate a delivery identification parameter CIDP_1; CIDP_2; CIDP_3 as a function of the received delivery and/or collection order Ord and send the delivery and/or collection identification parameter CIDP_1; CIDP_2; CIDP_3 to the ordering subject U.

The automated delivery system further comprises delivery means 500 configured to transport the ordered object O to the ordering subject U, and/or collect said object (O), in a corresponding package 60 identifiable by means of the delivery identification parameter CIDP _1 ;CIDP _2;CIDP _3.

A structure, in particular a door 50, as previously described, is part of the delivery system and is configured to receive and/allow the delivery of the package 60.

The first locking assembly 64, as previously described, is electronically controlled and lockable/unlockable as a function of a predefined access parameter IDP_1;IDP_2;IDP_3.

In the delivery system of the invention, the delivery and/or collection identification parameter CIDP_1;CIDP_2;CIDP_3, received from the ordering subject U and identifying the package 60, corresponds to the predefined access parameter IDP_1;IDP_2;IDP_3.

According to the invention, the order receiving station 400 is configured to send the delivery and/or collection identification parameter CIDP_1; CIDP_2; CIDP 3 to the ordering subject U through the direct and unmodifiable setting of said delivery and/or collection identification parameter CIDP_1 ;CIDP_2;CIDP_3 on the first locking assembly 64.

According to the invention, the delivery and/or collection identification parameter (CIDP_1; CIDP_2; CIDP_3) comprises a time parameter (Tc) representing a period of validity for said delivery and/or collection identification parameter (CIDP_1; CIDP_2; CIDP_3)..

According to the invention, the order receiving station 400 is configured to disable said delivery and/or collection identification parameter (CIDP_1; CIDP_2; CIDP_3) with a completed delivery or the expiration of said time parameter (Tc).

The technical effect achieved is the inhibition of further deliveries and/or collections with the same delivery and/or collection identifier. According to the invention, the predefined access parameter IDP_1; IDP_2; IDP_3 comprises one or more from among:
- a first access parameter IDP_1 representing a delivering subject S adapted to interact with the compartment 58.
- a second access parameter IDP_2 representing the object O in the corresponding package 60 to be placed in the compartment 58, and/or representing said object (O) in a package to be collected from said compartment (58);
- a third access parameter IDP_3 representing the order (Ord) made of the object O in the corresponding package 60 to be placed in the compartment 58 and/or to be collected from said compartment 58.

According to the invention, the order receiving station 400 is connected to a random code generator () configured to generate the predefined access parameter IDP_1; IDP_2; IDP_3.

Preferably, once the compartment 58 is closed and the detection means 75 has confirmed the delivery and/or collection of the package 60, the processing unit 100 sends an email message to the receiving station 400.

In the case of delivery, preferably, the detection means 75 is equipped with a small television camera configured to photograph the package 60 in the closed compartment 58 and send these pictures, for example, to a smartphone of the delivering subject S.

Alternatively, a small printer can be provided that generates a sort of delivery receipt for the delivering subject S so that the delivery of the package can be confirmed.

As a person skilled in the art can easily understand, the invention allows overcoming the drawbacks highlighted above with reference to the prior art.

In particular, the present invention provides a structure, in particular a door, able to ensure an automated and certain receipt and/or delivery of goods addressed to a customer.

In particular, the present invention provides an automated delivery and/or collection system able to ensure a delivery and/or collection of goods by a supplier and an autonomous and certain receipt and/or collection of the goods by a customer.

It is clear that the specific characteristics are described in relation to different embodiments of the invention with an exemplary and non-limiting intent. Obviously a person skilled in the art can make further modifications and variants to the present invention, in order to satisfy contingent and specific needs. For example, the technical characteristics described in relation to an embodiment of the invention can be extrapolated therefrom and applied to other embodiments of the invention. Such modifications and variations are moreover contained within the scope of the invention as defined by the following claims.

## Claims

1. A structure (50) for deliveries and/or collections comprising
- a compartment (58) adapted to contain packages (60),
- the compartment (58) being equipped with first detection means (75) for detecting the packages (60) configured for detecting the actual presence of the package upon the closure of the compartment (58) in order to avoid false deliveries;
- wherein the compartment (58) extends prevalently on the internal side (I) of the structure (50) and has a collapsible structure allowing limiting the dimensions in the internal side (I) of the structure when the compartment (58) is not used and increasing the volume when the compartment (58) is going to receive said package (60);
wherein said structure (50) coupled to said compartment (58) comprises one from among:
a window;
a façade/surface equipped with windows;
a wall inside or outside a house or a delivery/collection location;
a gate, a fence or railing or outer limit of a house or garden of a condominium or independent house;
- a hatch (62) adapted to allow the passage of packages into/out of the compartment (58), wherein the hatch (62):
- opens on the external side (E) of the structure (50);
- is adapted to pass from a closed position (C) to a completely open position (A);
- a first locking assembly (64) adapted to lock and unlock selectively the hatch (62) in the closed position (C),
wherein said first locking assembly (64) is electronically controlled and lockable/unlockable as a function of a predefined access parameter (IDP_1 ;IDP_2;IDP_3);
- a processing unit (100) logically connected to said first locking assembly (64), comprising:
a receiving module (101) configured to receive one or more from among:
- a first access parameter (ID_1) representing a delivering subject (S) adapted to interact with said compartment (58);
- a second access parameter (ID_2) representing a package (60) to be placed in said compartment (58);
- a third access parameter (ID_3) representing an order (Ord) made of said package (60) to be placed in said compartment (58);
a comparison module (102) configured for comparing said received access parameter (ID_1 ;ID_2;ID_3) with said predefined access parameter (IDP_1;IDP_2;IDP_3);
a release module (103) configured to release said first locking assembly (64) as a function of the correspondence between said predefined access parameter (IDP_1;IDP_2;IDP_3) and said received access parameter (ID_1;ID_2;ID_3).

2. The structure (50) according to claim 1 wherein said processing unit (100) is in data connection with one or more from among a local user interface (111) and a remote user interface (121) configured for an entry of said predefined access parameter (IDP_1;IDP_2;IDP_3) in said memory module (110);

3. The structure (50) according to claim 2, wherein said local user interface (111) comprises a keypad or touch display OR said remote user interface (121) comprises a means for entering data associated with one or more from among a calculator and/or a smartphone and/or a PC tablet.

4. The structure (50) according to any one of the preceding claims comprising a second detection means (200) arranged to detect said access parameter (ID_1;ID_2;ID_3), said second detection means (200) comprising one or more from among:
- a bar code reader (201), RFID etc. arranged to read an access parameter (ID_1;ID_2;ID_3), reproduced on a relevant legible medium;
- a touch screen display (202) arranged to receive a manual entry of said access parameter (ID_1;ID 2;ID 3)
- a television camera (203) arranged to film said access parameter (ID_1;ID_2;ID_3).

5. The structure (50) according to claim 4 wherein said second detection means (200) is provided with a telephone connection means (300) arranged to transmit towards said remote user interface (121) the detected access parameter (ID_1 ;ID_2;ID_3).

6. The structure (50) according to any one of the preceding claims wherein said compartment (58) can be coupled to/uncoupled from said structure (50).

7. The structure (50) according to claim 6 wherein said compartment (58) comprises an autonomous movement means (59) arranged for the automated coupling/uncoupling of said compartment (58) with respect to the structure (50) itself.

8. The structure (50) according to the preceding claim, wherein the collapsible structure of the compartment (58) comprises folding side walls hinged to each other and an internal hatch (66) movable between a horizontal position and a vertical position.

9. The structure (50) according to the preceding claim, wherein the internal hatch (66):
in the vertical position is arranged parallel and near the hatch (62) and allows the structure of the compartment (58) to fold on itself; and
in the horizontal position is arranged to close above the compartment (58) and stiffen the structure in order to avoid it folding on itself.

10. The structure (50) according to anyone of the preceding claims, wherein the compartment (58) has a bellows structure extendible, when in the condition of receipt/delivery of goods, with a rotation axis that is perpendicular or parallel to the direction of the gravitational acceleration vector g.

11. The structure (50) according to any one of the preceding claims comprising a door (50) adapted to be placed at the entrance of a house so as to define an internal side (I) and an external side (E), the door (50) comprising:
- a wing (52) adapted to allow the passage of people into/out of the house,
- a first hinge assembly (54) adapted to allow the rotation of the wing (52) between a closed position (C) and a completely open position (A),
- a second locking assembly (56) adapted to selectively lock and unlock the wing (52) in the closed position (C),
wherein the door (50) comprises said compartment (58).

12. An automated delivery and/or collection system comprising:
an order receiving station (400) configured to:
- receive a delivery and/or collection order (Ord) of an object (O) from an ordering subject (U);
- generate a delivery and/or collection identification parameter (CIDP_1;CIDP_2;CIDP_3) as a function of said received order (Ord);
- send said delivery and/or collection identification parameter (CIDP_1;CIDP_2;CIDP_3) to said ordering subject (U);
a delivery means (500) configured to transport said ordered object (O) to said ordering subject (U), and/or collect said object (O), in a corresponding package (60) identifiable by means of said delivery identification parameter (CIDP_1 ;CIDP_2;CIDP_3);
a structure (50) according to any one of the preceding claims configured to receive and/or allow the delivery of the package (60), wherein said first locking assembly (64) is electronically controlled and lockable/unlockable as a function of a predefined access parameter (IDP_1;IDP_2;IDP_3).
- wherein said delivery and/or collection identification parameter (CIDP_1;CIDP_2;CIDP_3), received from said ordering subject (U) and identifying said package (60), corresponds to said predefined access parameter (IDP_1 ;IDP_2;IDP_3).

13. An automated delivery system according to claim 12 wherein said order receiving station (400) is configured to send said delivery and/or collection identification parameter (CIDP_1; CIDP_2; CIDP_3) to said ordering subject (U) through the direct and unmodifiable setting of said delivery and/or collection identification parameter (CIDP_1; CIDP_2; CIDP_3) on said first locking assembly (64),
wherein said delivery and/or collection identification parameter (CIDP_1; CIDP_2; CIDP_3) comprises a time parameter (Tc) representing a period of validity for said delivery and/or collection identification parameter (CIDP_1; CIDP_2; CIDP_3),AND
said order receiving station (400) is configured to disable said delivery and/or collection identification parameter (CIDP_1; CIDP_2; CIDP_3) upon a completed delivery or the expiration of said time parameter (Tc).

14. The delivery system according to any one of the preceding claims from 12 to 13, wherein said predefined access parameter (IDP_1;IDP_2;IDP_3) comprises one or more from among:
- a first access parameter (IDP_1) representing a delivering subject (S) adapted to interact with said compartment (58);
- a second access parameter (IDP_2) representing said object (O) in said corresponding package (60) to be placed in said compartment (58), and/or representing said object (O) in a package to be collected from said compartment (58);
- a third access parameter (IDP_3) representing said order (Ord) made of said object (O) in said corresponding package (60) to be placed in said compartment (58) and/or to be collected from said compartment (58).

## Patentansprüche

1. Struktur (50) für Lieferungen und/oder Abholungen, umfassend:
- eine Unterteilung (58), die zum Enthalten von Paketen (60) ausgebildet ist,
- wobei die Unterteilung (58) mit ersten Erfassungsmitteln (75) zum Erfassen der Pakete (60) ausgestattet ist, die zum Erfassen des tatsächlichen Vorhandenseins des Pakets nach dem Schließen der Unterteilung (58) ausgelegt sind, um Falschlieferungen zu vermeiden;
- wobei sich die Unterteilung (58) überwiegend auf der Innenseite (I) der Struktur (50) erstreckt und eine zusammenklappbare Struktur aufweist, die es ermöglicht, die Abmessungen in der Innenseite (I) der Struktur zu begrenzen, wenn die Unterteilung (58) nicht verwendet wird, und das Volumen zu erhöhen, wenn die Unterteilung (58) das Paket (60) empfangen wird;
wobei die Struktur (50), die mit der Unterteilung (58) gekoppelt ist, eine/s aus der folgenden Gruppe umfasst:
einem Fenster;
einer mit Fenstern ausgestatteten Fassade/Oberfläche;
einer Wand innerhalb oder außerhalb eines Hauses oder eines Liefer-/Abholortes;
einem Tor, einem Zaun oder einem Geländer oder einer äußeren Begrenzung eines Hauses oder Gartens einer Eigentumswohnung oder eines unabhängigen Hauses;
- eine Klappe (62), die ausgebildet ist, um den Durchgang von Paketen in/aus der Unterteilung (58) zu ermöglichen, wobei die Klappe (62):
- sich auf der Außenseite (E) der Struktur (50) öffnet;
- ausgebildet ist, um von einer geschlossenen Position (C) in eine vollständig geöffnete Position (A) überzugehen;
- eine erste Verriegelungsanordnung (64), die dazu ausgebildet ist, die Klappe (62) in der geschlossenen Position (C) selektiv zu verriegeln und zu entriegeln, wobei die erste Verriegelungsanordnung (64) als Funktion eines vordefinierten Zugriffsparameters (IDP_1;IDP_2;IDP_3) elektronisch gesteuert und verriegelbar/entriegelbar ist;
- eine Verarbeitungseinheit (100), die logisch mit der ersten Verriegelungsanordnung (64) verbunden ist, umfassend:
ein Empfangsmodul (101), das ausgelegt ist, um eines oder mehrere von Folgendem zu empfangen:
- einem ersten Zugriffsparameter (ID_1), der ein ablieferndes Subjekt (S) darstellt, das ausgebildet ist, um mit der Unterteilung (58) zu interagieren;
- einem zweiten Zugriffsparameter (ID_2), der ein Paket (60) darstellt, das in der Unterteilung (58) platziert werden soll;
- einem dritten Zugriffsparameter (ID_3), der eine aufgegebene Bestellung (Ord) des Pakets (60) darstellt, das in die Unterteilung (58) platziert werden soll;
ein Vergleichsmodul (102), das zum Vergleichen des empfangenen Zugriffsparameters (ID_1;ID_2;ID_3) mit dem vordefinierten Zugriffsparameter (IDP_1;IDP_2;IDP_3) ausgelegt ist;
ein Freigabemodul (103), das dazu ausgelegt ist, die erste Verriegelungsanordnung (64) als Funktion der Übereinstimmung zwischen dem vordefinierten Zugriffsparameter (IDP_1;IDP_2;IDP_3) und dem empfangenen Zugriffsparameter (ID_1;ID_2;ID_3) freizugeben.

2. Struktur (50) nach Anspruch 1, wobei die Verarbeitungseinheit (100) in Datenverbindung mit einer oder mehreren unter einer lokalen Benutzerschnittstelle (111) und einer entfernten Benutzerschnittstelle (121) steht, die für eine Eingabe des vordefinierten Zugriffsparameters (IDP_1;IDP_2;IDP_3) in das Speichermodul (110) ausgelegt ist.

3. Struktur (50) nach Anspruch 2, wobei die lokale Benutzerschnittstelle (111) ein Tastenfeld oder eine Berührungsanzeige umfasst ODER die entfernte Benutzerschnittstelle (121) Mittel zum Eingeben von Daten umfasst, die einem oder mehreren unter einem Rechner und/oder einem Smartphone und/oder einem PC-Tablet zugeordnet sind.

4. Struktur (50) nach einem der vorhergehenden Ansprüche, umfassend zweite Erfassungsmittel (200), die angeordnet sind, um den Zugriffsparameter (ID_1;ID_2;ID_3) zu erfassen, wobei die zweiten Erfassungsmittel (200) eines oder mehrere von Folgendem umfassen:
- einem Strichcodeleser (201), RFID usw., der angeordnet ist, um einen Zugriffsparameter (ID_1;ID_2;ID_3) zu lesen, der auf einem relevanten lesbaren Medium wiedergegeben wird;
- einem Touchscreen-Display (202), das angeordnet ist, um eine manuelle Eingabe des Zugriffsparameters (ID_1;ID_2;ID_3) zu empfangen;
- einer Fernsehkamera (203), die angeordnet ist, um den Zugriffsparameter (ID_1;ID_2;ID_3) zu filmen.

5. Struktur (50) nach Anspruch 4, wobei die zweiten Erfassungsmittel (200) mit Telefonverbindungsmitteln (300) versehen sind, die angeordnet sind, um den erfassten Zugriffsparameter (ID_1;ID_2;ID_3) an die entfernte Benutzerschnittstelle (121) zu übermitteln.

6. Struktur (50) nach einem der vorhergehenden Ansprüche, wobei die Unterteilung (58) mit der Struktur (50) gekoppelt/von ihr entkoppelt werden kann.

7. Struktur (50) nach Anspruch 6, wobei die Unterteilung (58) autonome Bewegungsmittel (59) umfasst, die zum automatisierten Koppeln/Entkoppeln der Unterteilung (58) in Bezug auf die Struktur (50) selbst angeordnet sind.

8. Struktur (50) nach dem vorhergehenden Anspruch, wobei die zusammenklappbare Struktur der Unterteilung (58) Faltseitenwände, die gelenkig miteinander verbunden sind, und eine innere Klappe (66) umfasst, die zwischen einer horizontalen Position und einer vertikalen Position bewegbar ist.

9. Struktur (50) nach dem vorhergehenden Anspruch, wobei die innere Klappe (66):
in der vertikalen Position parallel und nahe der Klappe (62) angeordnet ist und es der Struktur der Unterteilung (58) ermöglicht, sich auf sich selbst zu falten; und
in der horizontalen Position so angeordnet ist, dass sie sich über der Unterteilung (58) schließt und die Struktur versteift, um zu vermeiden, dass sie sich auf sich selbst faltet.

10. Struktur (50) nach einem der vorhergehenden Ansprüche, wobei die Unterteilung (58) eine Balgstruktur aufweist, die, wenn sie sich im Zustand des/der Warenempfangs/-zulieferung befindet, mit einer Drehachse ausgedehnt werden kann, die senkrecht oder parallel zur Richtung des Gravitationsbeschleunigungsvektors g ist.

11. Struktur (50) nach einem der vorhergehenden Ansprüche, umfassend eine Tür (50), die ausgebildet ist, um am Eingang eines Hauses platziert zu werden, um eine Innenseite (I) und eine Außenseite (E) zu definieren, wobei die Tür (50) umfasst:
- einen Flügel (52), der ausgebildet ist, um den Durchgang von Personen in/aus dem Haus zu ermöglichen,
- eine erste Scharnieranordnung (54), die ausgebildet ist, um die Drehung des Flügels (52) zwischen einer geschlossenen Position (C) und einer vollständig offenen Position (A) zu ermöglichen,
- eine zweite Verriegelungsanordnung (56), die dazu ausgebildet ist, den Flügel (52) in der geschlossenen Position (C) selektiv zu verriegeln und zu entriegeln, wobei die Tür (50) die Unterteilung (58) umfasst.

12. Automatisiertes Liefer- und/oder Abholungssystem, umfassend:
eine Auftragsempfangsstation (400), die zu Folgendem ausgelegt ist:
- Empfangen eines Liefer- und/oder Abholauftrags (Ord) eines Objekts (O) von einem auftraggebenden Subjekt (U);
- Generieren eines Liefer- und/oder Abholidentifikationsparameters (CIDP_1;CIDP_2;CIDP_3) als Funktion des empfangenen Auftrags (Ord);
- Senden des Liefer- und/oder Abholidentifikationsparameters (CIDP_1;CIDP_2;CIDP_3) an das auftraggebende Subjekt (U);
Liefermittel (500), die ausgelegt sind, um das in Auftrag gegebene Objekt (O) zu dem auftraggebenden Subjekt (U) zu transportieren und/oder das Objekt (O) in einem entsprechenden Paket (60) abzuholen, das mittels des Lieferidentifikationsparameters (CIDP_1;CIDP_2;CIDP_3) identifizierbar ist;
eine Struktur (50) nach einem der vorhergehenden Ansprüche, die dazu ausgelegt ist, das Paket (60) zu empfangen und/oder dessen Lieferung zu ermöglichen, wobei die erste Verriegelungsanordnung (64) als Funktion eines vordefinierten Zugriffsparameters (IDP_1;IDP_2;IDP_3) elektronisch gesteuert und verriegelbar/entriegelbar ist;
- wobei der Liefer- und/oder Abholidentifikationsparameter (CIDP_1;CIDP_2;CIDP_3), der von dem auftraggebenden Subjekt (U) empfangen wurde und das Paket (60) identifiziert, dem vordefinierten Zugriffsparameter (IDP_1;IDP_2;IDP_3) entspricht.

13. Automatisiertes Liefersystem nach Anspruch 12, wobei die Auftragsempfangsstation (400) ausgelegt ist, um den Liefer- und/oder Abholidentifikationsparameter (CIDP_1; CIDP_2; CIDP_3) an das auftraggebende Subjekt (U) durch die direkte und unveränderliche Einstellung des Liefer- und/oder Abholidentifikationsparameters (CIDP_1; CIDP_2; CIDP_3) auf der ersten Verriegelungsanordnung (64) zu senden,
wobei der Liefer- und/oder Abholidentifikationsparameter (CIDP_1; CIDP_2; CIDP_3) einen Zeitparameter (Tc) umfasst, der einen Gültigkeitszeitraum für den Liefer- und/oder Abholidentifikationsparameter (CIDP_1; CIDP_2; CIDP_3) darstellt, und
die Auftragsempfangsstation (400) ausgelegt ist, um den Liefer- und/oder Abholidentifikationsparameter (CIDP_1; CIDP_2; CIDP_3) nach einer abgeschlossenen Lieferung oder dem Ablauf des Zeitparameters (Tc) zu deaktivieren.

14. Liefersystem nach einem der vorhergehenden Ansprüche 12 bis 13, wobei der vordefinierte Zugriffsparameter (IDP_1;IDP_2;IDP_3) einen oder mehrere aus der folgenden Gruppe umfasst:
- einem ersten Zugriffsparameter (IDP_1), der ein ablieferndes Subjekt (S) darstellt, das ausgebildet ist, um mit der Unterteilung (58) zu interagieren;
- einem zweiten Zugriffsparameter (IDP_2), der das Objekt (O) in dem entsprechenden Paket (60) darstellt, das in der Unterteilung (58) platziert werden soll, und/oder der das Objekt (O) in einem Paket darstellt, das aus der Unterteilung (58) abgeholt werden soll;
- einem dritten Zugriffsparameter (IDP_3), der den aufgegebenen Auftrag (Ord) des Objekts (O) im entsprechenden Paket (60) darstellt, um in der Unterteilung (58) platziert zu werden und/oder aus der Unterteilung (58) abgeholt zu werden.

## Revendications

1. Structure (50) pour livraisons et/ou collectes, comprenant :
- un compartiment (58) adapté pour contenir des colis (60),
- le compartiment (58) étant équipé de premiers moyens de détection (75) pour détecter les colis (60) configurés pour détecter la présence réelle du colis lors de la fermeture du compartiment (58) afin d'éviter de fausses livraisons ;
- dans laquelle le compartiment (58) se prolonge principalement sur le côté interne (I) de la structure (50) et comporte une structure repliable permettant de limiter les dimensions dans le côté interne (I) de la structure lorsque le compartiment (58) n'est pas utilisé et d'augmenter le volume lorsque le compartiment (58) va recevoir ledit colis (60) ;
dans laquelle ladite structure (50) couplée audit compartiment (58) comprend l'un des éléments suivants :
une fenêtre ;
une façade/surface équipée de fenêtres ;
un mur à l'intérieur ou à l'extérieur d'une maison ou d'un emplacement de livraison/collecte ;
un portail, une clôture ou une balustrade ou une limite extérieure d'une maison ou d'un jardin d'un immeuble ou d'une maison indépendante ;
- une trappe (62) adaptée pour permettre le passage des colis à l'intérieur/à l'extérieur du compartiment (58), dans laquelle la trappe (62) :
- s'ouvre sur le côté extérieur (E) de la structure (50) ;
- est adaptée pour passer d'une position fermée (C) à une position complètement ouverte (A) ;
- un premier ensemble de verrouillage (64) adapté pour verrouiller et déverrouiller sélectivement la trappe (62) dans la position fermée (C),
dans laquelle ledit premier ensemble de verrouillage (64) est commandé électroniquement et peut être verrouillé/déverrouillé en fonction d'un paramètre d'accès prédéfini (IDP_1 ; IDP_2 ; 1DP_3) ;
- une unité de traitement (100) connectée logiquement audit premier ensemble de verrouillage (64), comprenant :
un module de réception (101) configuré pour recevoir un ou plusieurs paramètres parmi :
- un premier paramètre d'accès (ID_1) représentant un sujet de la livraison (S) apte à interagir avec ledit compartiment (58) ;
- un deuxième paramètre d'accès (ID_2) représentant un colis (60) à placer dans ledit compartiment (58) ;
- un troisième paramètre d'accès (ID_3) représentant une commande (Ord) constituée dudit colis (60) à placer dans ledit compartiment (58) ;
un module de comparaison (102) configuré pour comparer ledit paramètre d'accès reçu (ID_1 ; ID_2 ; ID_3) avec ledit paramètre d'accès prédéfini (IDP_1 ; IDP_2 ; IDP_3) ;
un module de libération (103) configuré pour libérer ledit premier ensemble de verrouillage (64) en fonction de la correspondance entre ledit paramètre d'accès prédéfini (IDP_1 ; IDP_2 ; IDP_3) et ledit paramètre d'accès reçu (ID_1 ; ID_2 ; ID_3).

2. Structure (50) selon la revendication 1, dans laquelle ladite unité de traitement (100) est en connexion de données avec une ou plusieurs interfaces parmi une interface utilisateur locale (111) et une interface utilisateur distante (121) configurée pour une entrée dudit paramètre d'accès prédéfini (IDP_1 ; IDP_2 ; IDP_3) dans ledit module de mémoire (110).

3. Structure (50) selon la revendication 2, dans laquelle ladite interface utilisateur locale (111) comprend un clavier ou un écran tactile OU ladite interface utilisateur distante (121) comprend des moyens de saisie de données associés à un ou plusieurs appareils parmi une calculatrice et/ou un Smartphone et/ou une tablette PC.

4. Structure (50) selon l'une quelconque des revendications précédentes, comprenant des deuxièmes moyens de détection (200) disposés pour détecter ledit paramètre d'accès (ID_1 ; ID_2 ; ID_3), lesdits deuxièmes moyens de détection (200) comprenant un ou plusieurs dispositifs parmi :
- un lecteur de code à barres (201), RFID etc. disposé pour lire un paramètre d'accès (ID_1 ; ID_2 ; ID_3), reproduit sur un support lisible pertinent ;
- un écran tactile (202) disposé pour recevoir une entrée manuelle dudit paramètre d'accès (ID_1 ; ID_2 ; ID_3) ;
- une caméra de télévision (203) destinée à filmer ledit paramètre d'accès (ID_1 ; ID_2 ; ID_3).

5. Structure (50) selon la revendication 4, dans laquelle lesdites deuxièmes moyens de détection (200) sont pourvus de moyens de connexion téléphonique (300) disposés pour transmettre vers ladite interface utilisateur distante (121) le paramètre d'accès détecté (ID_1 ; ID_2 ; ID_3).

6. Structure (50) selon l'une quelconque des revendications précédentes, dans laquelle ledit compartiment (58) peut être couplé à/découplé de ladite structure (50).

7. Structure (50) selon la revendication 6, dans laquelle ledit compartiment (58) comprend des moyens de déplacement autonomes (59) disposés pour le couplage/découplage automatisé dudit compartiment (58) par rapport à la structure (50) elle-même.

8. Structure (50) selon la revendication précédente, dans laquelle la structure repliable du compartiment (58) comprend des parois latérales extensibles montées articulées entre elles et une trappe interne (66) mobile entre une position horizontale et une position verticale.

9. Structure (50) selon la revendication précédente, dans laquelle la trappe interne (66) :
dans la position verticale est disposée parallèlement et à proximité de la trappe (62) et permet à la structure du compartiment (58) de se replier sur elle-même ; et
dans la position horizontale est disposée pour se fermer au-dessus du compartiment (58) et rigidifier la structure afin d'éviter qu'elle ne se replie sur elle-même.

10. Structure (50) selon l'une quelconque des revendications précédentes, dans laquelle le compartiment (58) comporte une structure à soufflets extensibles, lorsqu'elle se trouve dans la condition de réception/livraison de marchandises, avec un axe de rotation perpendiculaire ou parallèle à la direction du vecteur d'accélération gravitationnelle g.

11. Structure (50) selon l'une quelconque des revendications précédentes, comprenant une porte (50) adaptée pour être placée à l'entrée d'une maison de manière à définir un côté intérieur (I) et un côté extérieur (E), la porte (50) comprenant :
- un vantail (52) adapté pour permettre le passage de personnes à l'intérieur/à l'extérieur de la maison,
- un premier ensemble de charnières (54) adapté pour permettre la rotation du vantail (52) entre une position fermée (C) et une position complètement ouverte (A),
- un deuxième ensemble de verrouillage (56) adapté pour verrouiller et déverrouiller sélectivement le vantail (52) dans la position fermée (C),
dans laquelle la porte (50) comprend ledit compartiment (58) .

12. Système automatisé de livraison et/ou de collecte, comprenant :
un poste de réception des commandes (400) configuré pour :
- recevoir une commande de livraison et/ou de collecte (Ord) d'un objet (O) de la part d'un sujet de la commande (U) ;
- générer un paramètre d'identification de livraison et/ou de collecte (CIDP_1 ; CIDP_2 ; CIDP_3) en fonction de la commande reçue (Ord) ;
- envoyer ledit paramètre d'identification de livraison et/ou de collecte (CIDP_L ; CIDP_2 ; CIDP_3) audit sujet de la commande (U) ;
des moyens de livraison (500) configurés pour transporter ledit objet (O) commandé audit sujet de la commande (U), et/ou collecter ledit objet (O), dans un emballage (60) correspondant identifiable au moyen dudit paramètre d'identification de livraison (CIDP_L ; CIDP_2 ; CIDP_3) ;
une structure (50) selon l'une quelconque des revendications précédentes configurée pour recevoir et/ou permettre la livraison du colis (60), dans lequel ledit premier ensemble de verrouillage (64) est commandé électroniquement et pouvant être verrouillé/déverrouillé en fonction d'un paramètre d'accès prédéfini (IDP_1 ; IDP_2 ; IDP_3) ;
- dans lequel ledit paramètre d'identification de livraison et/ou de collecte (CIDP_L ; CIDP_2 ; CIDP_3), reçu dudit sujet de la commande (U) et identifiant ledit colis (60), correspond audit paramètre d'accès prédéfini (IDP_1 ; IDP_2 ; IDP_3).

13. Système automatisé de livraison selon la revendication 12, dans lequel ledit poste de réception de commande (400) est configuré pour envoyer ledit paramètre d'identification de livraison et/ou de collecte (CIDP_L ; CIDP_2 ; CIDP_3) audit sujet de la commande (U) par le réglage direct et non modifiable dudit paramètre d'identification de livraison et/ou de collecte (CIDP_L ; CIDP_2 ; CIDP_3) sur ledit premier ensemble de verrouillage (64),
dans lequel ledit paramètre d'identification de livraison et/ou de collecte (CIDP_L ; CIDP_2 ; CIDP_3) comprend un paramètre temporel (Tc) représentant une période de validité dudit paramètre d'identification de livraison et/ou de collecte (CIDP_L ; CIDP_2 ; CIDP_3), et
ledit poste de réception des commandes (400) est configuré pour désactiver ledit paramètre d'identification de livraison et/ou de collecte (CIDP_L ; CIDP_2 ; CIDP_3) lors d'une livraison effectuée ou de l'expiration dudit paramètre temporel (Tc) .

14. Système de livraison selon l'une quelconque des revendications précédentes de 12 à 13, dans lequel ledit paramètre d'accès prédéfini (IDP_1 ; IDP_2 ; IDP_3) comprend un ou plusieurs paramètres parmi :
- un premier paramètre d'accès (IDP_1) représentant un sujet de la livraison (S) apte à interagir avec ledit compartiment (58) ;
- un deuxième paramètre d'accès (IDP_2) représentant ledit objet (O) dans ledit colis (60) correspondant à placer dans ledit compartiment (58), et/ou représentant ledit objet (O) dans un colis à collecter dudit compartiment (58) ;
- un troisième paramètre d'accès (IDP_3) représentant ladite commande (Ord) constituée dudit objet (O) dans ledit colis (60) correspondant à placer dans ledit compartiment (58) et/ou à collecter dudit compartiment (58) .
